# EUROPEAN PATENT SPECIFICATION

(11) **EP 1 357 662 B1**
(45) Date of publication and mention of the grant of the patent: **12.12.2012**
(21) Application number: 02015170.0
(22) Date of filing: 08.07.2002
(51) Int. Cl.: H02P 3/06

(54) **Motor control**
Motorregelung
Régulation de moteur

(30) Priority: 27.04.2002 GB 0209665
(43) Date of publication of application: 29.10.2003
(73) Proprietor: Yorkshire Technology Limited, Bradford West Yorkshire BD4 7BB (GB)
(72) Inventor: Ryecroft, Gary, Leeds, LS8 1JH (GB)
(74) Representative: Waddington, Richard

(56) References cited:
- EP-A- 0 739 086
- DE-U- 20 021 290
- GB-A- 2 292 847
- US-B1- 6 184 641
- US-B1- 6 329 785

## Description

This invention relates to a control system for a motor and to a method of controlling a motor.

Single phase or linear electrical motors are typically used to operate blinds, awnings, gates, barriers and roller shutters.

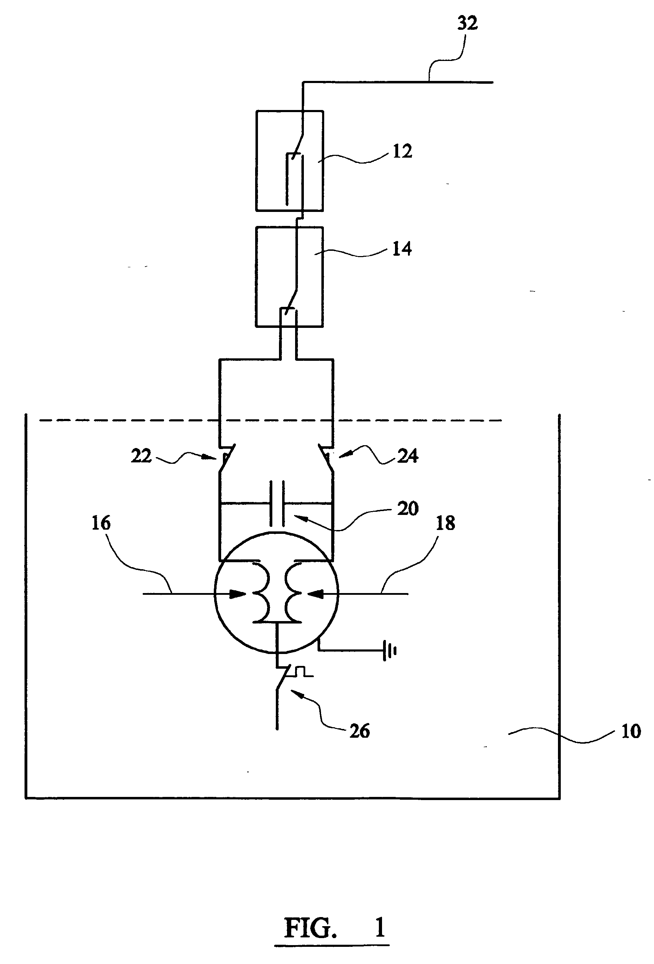

Figure 1 shows schematically a prior art arrangement of a motor 10 controlled by a power relay 12 (shown in Figure 1 in the OFF position) and a direction relay 14. The motor 10 has a first winding 16 and a second winding 18 for forward and reverse operation of a shutter, bollard or the like controlled by the motor 10. A capacitor 20 is connected between the first and second motor windings 16 and 18 in order to provide a phase delay for the rotating magnetic field of the motor windings 16, 18.

The prior art arrangement also has a first limit switch 22 and a second limit switch 24. When the shutter or bollard controlled by the motor reaches an end of travel limit at which the first limit switch 22 or the second limit switch 24 is located the motor 10 is disconnected from power supply.

The prior art set up also includes a thermal trip 26, which, on detecting excessive heat, causes the motor 10 to cut out. Heat build-up may be caused by the motor stalling before reaching the set end limit of travel at the first or second limit switches 22 and 24. The disconnection by the thermal trip 26 is temporary. If the power supply is left connected to the motor the motor will try to re-start once it has cooled down and the thermal trip 26 has been re-set by the reduction in temperature. This may lead to early wear or failure of the motor.

Another variant of existing motor is similar to that shown in Figure 1 except that the limit switches 22 and 24 are not used. In this case a run timer is set to switch off the motor at the end of the chosen run time, which should correspond to the time for the shutter, bollard or similar to move between open and closed positions. If the run time is set to be too long, then the motor 10 stalls due to hitting a mechanical stop at its limit of movement and then the thermal trip 26 activates after several minutes of the motor stalling, temporarily disconnecting the motor from the electrical supply. If the supply is left connected to the motor, the motor will try to start once it has cooled down.

As can be appreciated from the above, the problem of a motor repeatedly trying to move the shutter, bollard or gate when the motor has stalled is encountered. The use of a thermal trip 26 alleviates the problem to some extent, but it is still the case that the motor continues to attempt to turn when the thermal trip is deactivated after a few minutes during which the motor 10 cools down.

Also, a problem is encountered in that it is not possible with these systems to detect whether a motor has stopped because it has stalled during the travel of the shutter, or because it has reached its limit switch.

The problem is exacerbated by using a motor with a torque which is too great for the particular application. Motors 10 are typically supplied with a standard torque, which may be 60 Nm or 120 Nm, for instance. If a 120 Nm motor is used instead of a 60 Nm motor which may be more appropriate, then excessive torque is applied which can result in extreme wear due to heating of the motor at end stops.

DE 200 21 290 U1 which is regarded as closest prior art, and GB-A-2292847 disclose stall detection circuits

It is an object of the present invention to address the above mentioned disadvantages.

According to a first aspect of the invention a drive system for a movable closure device comprises:
a motor comprising first and second windings operable to drive a movable closure device in one direction to an open position thereof and in an opposite direction to a closed position thereof and vice versa by selecting one of the windings and deselecting the other; and
stall detection means operable to detect a stall condition of the motor, based on a reduced voltage detected in circuitry of the motor;
wherein, the stall detection means is operable to detect a potential of a non-selected first or second winding.

The stall detection means is preferably operable to detect a potential of a non-selected first or second winding. The stall detection means is preferably operable to detect a fall in potential below a first predetermined threshold value of the non-selected first or second winding. The predetermined threshold value may be approximately in the range 130V to 210V, preferably approximately 140V to 200V, most preferably 165V to 185V.

The stall detection means is preferably operable to detect a halving of the supply potential at the non-selected winding. The halving may be caused by a transformer effect, due to a capacitor of the drive system, the transformer effect may include a phase shift effect.

The stall detection means may be operable to compare a potential of a selected first or second winding with a potential of a non-selected second or first winding.

The stall detection means may be operable to detect a fall in potential of the first or second non-selected winding, below a second predetermined threshold value, which is preferably less than the first predetermined threshold value. The second predetermined threshold value is preferably approximately in the range 25v to 75v, more preferably in the range 40v to 60v.

The second predetermined threshold value may be used by the stall detection means to determine if a limit switch of the drive system has been triggered.

The stall detection means may be operable to measure the potential of the first or second non-selected winding for the first predetermined threshold before the second predetermined threshold, preferably approximately 15 to 50 millseconds (ms) before, more preferably approximately 20ms to 30 ms before.

If the measured potential does not fall below the second predetermined threshold then the motor is preferably disconnected, preferably within approximately 40ms to 80ms, more preferably within 50ms to 70ms.

The stall detection means may be operable to convert the measured potential from an analogue signal to a digital signal with conversion means.

The movable closure device may be a blind, an awning, a gate, a barrier, a roller shutter or a similar device.

The invention extends to stall detection means for a movable closure device, as defined in relation to the first aspect.

According to a second aspect of the invention a method of driving a movable closure device comprises the features according to claim 10.

All of the features described herein may be combined with any of the above aspects, in any combination.

Specific embodiments of the present invention will now be described, by way of example, and with reference to the accompanying drawings, in which:
Figure 1 is a schematic diagram of control circuitry for a prior art set up for a roller shutter motor;
Figure 2 is a schematic diagram of control circuitry for a first embodiment of motor set up for a roller shutter; and
Figure 3 is a schematic diagram of electrical circuitry for a second embodiment of roller shutter control system.

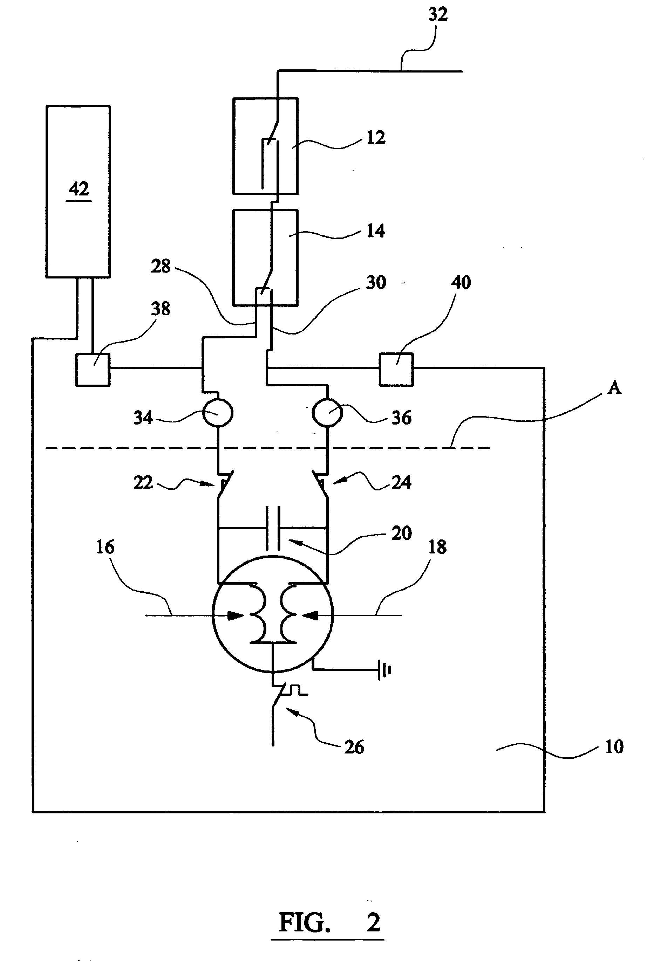

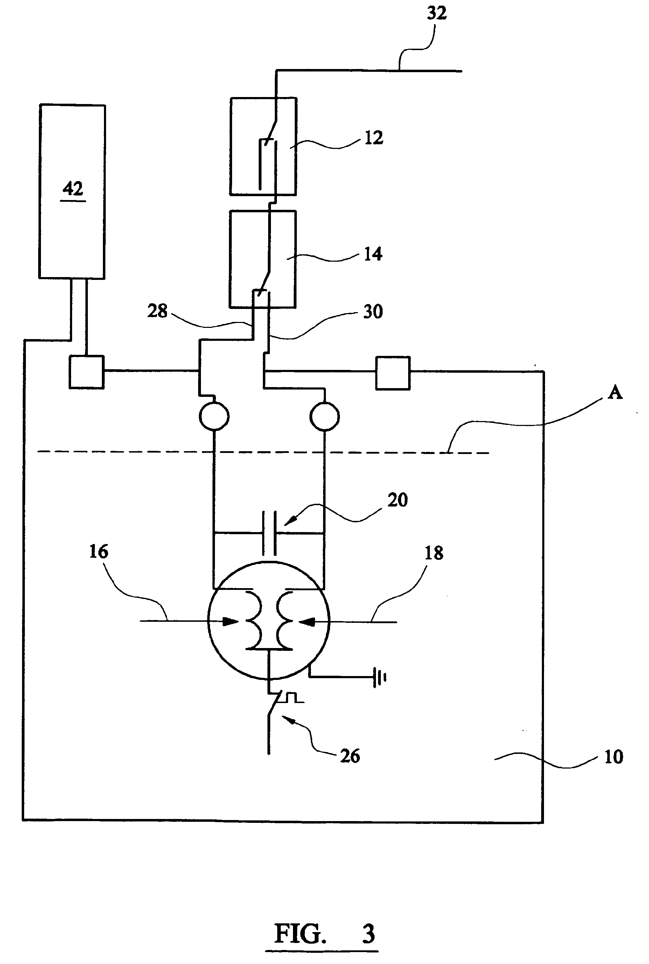

The systems in Figures 2 and 3 have a number of parts in common with those described in relation to the prior art shown in Figure 1. Like parts have been given the same reference numerals.

In Figure 2 the section of the diagram below the dashed line marked A is constructed in the same way as that shown in Figure 1 and as described in more detail above.

Briefly, a first motor winding 16 and second motor winding 18 enable a motor 10 to turn in both forward and reverse directions for the operation of a roller shutter, blind, awning, gate, barrier or the like. A first limit switch 22 and a second limit switch 24 are used to trip the electrical supply when the roller shutter or the like reaches a first end (not shown) or a second end (not shown) of its movement. A capacitor connected between the first and second motor windings 16 and 18 provides a phase delay for the rotating magnetic field of the motor windings.

A thermal trip 26 disconnects the power supply in the event of over-heating of either of the motor windings 16, 18.

The system shown in Figure 2 also includes a power relay 12 which allows power to the system to be switched ON or OFF. Also, there is a direction relay 14 which allows selection between the first motor winding 16 and the second motor winding 18 to select the direction of travel of the roller shutter or the like. The direction relay 14 is connected to a first direction wire 28, which when the relay 14 is switched thereto allows operation of the first winding 16. A second direction wire 30, when selected by the direction relay 14 allows current to flow to the second motor winding 18 to allow operation thereof.

It is clear that only one direction wire is connected directly to mains supply 32 at any one time when the power relay 12 is on.

The control system described herein makes use of a first opto coupler 34 connected to the first direction wire 28 and a second opto coupler 36, connected to the second direction wire 30. The opto couplers allow a step down from the 240V mains supply to a 5V supply for a microcontroller or Programmable Interface Controller (PIC). First and second analogue-to-digital converting elements 38 and 40, located on the microcontroller 42 and adjacent to the corresponding first and second opto couplers, respectively supply digital signals for analysis of the voltages detected at the first direction wire 28 and the second direction wire 30.

When the motor 10 is running normally, the potential on the direction wire that has not been selected is equal to the potential of the mains supply 34. In some motors the signal is out of phase by 90° because of the effect of the capacitor 20, in other motors the phase difference is different and in some there is no change.

The microcontroller 42 with its inputs from the first and second analogue-to-digital converters 38 and 34 is used to monitor the potentials in the first direction wire 28 and the second direction wire 30 respectively.

A first check is made to establish if the potential on the direction wire that is not directly connected to the mains supply 32 falls below a threshold of 175 volts. The threshold is chosen because of a surprising effect which occurs during a stall of the motor 10. There is a transformer effect between the supply 32 and the unused direction wire via the capacitor 20. The transformer effect results in a step down from 240 volts to 120 volts (a 2:1 reduction) when the motor stalls. Thus, the use of the 175 volt limit allows for errors in measurement. Thus, if the potential detected on the unused direction wire 28/30 falls below the limit of 175 volts, then it is indicative that a stall condition may have arisen.

The fall below 175 volts is noted by the microcontroller 42 and the software of the microcontroller continues to scan for a further 25 milliseconds (ms). A mains cycle is 20ms, so 5ms is added to allow for error. The maximum potential in the scan period is measured. If the measured potential falls below a second threshold limit, which in this case is set to 50 volts, then this is indicative that the limit switch 22/24 has been activated and the motor 10 has been powered down. If the potential does not fall below the second threshold of 50 volts, then the motor has stalled. If this is the case, then the microcontroller 42 is programmed to disconnect the motor within 60 milliseconds.

By using the system described above disadvantageous overheating of the motor can be avoided by disconnecting the motor 10 before overheating and before the thermal trip 26 is activated.

Figure 3 shows an alternative arrangement to that shown in Figure 2. Many of the parts are in common with Figure 2, except that the first and second limit switches 22 and 24 are not present in the Figure 3 version.

This second embodiment does not use the second threshold of 50 volts mentioned above, because of the lack of limit switches 22/24 making this second limit unnecessary. Thus, if the potential stall is detected by a voltage of less than 175 volts the motor 10 can be disconnected within 60 milliseconds, as described in relation to the first embodiment, in order to prevent overheating.

Both of the embodiments described above advantageously use the effect that a stalled motor creates a transformer effect with the unselected direction wire 28/30 via the capacitor 20 to halve the potential at that unselected direction wire 28/30. The beneficial use of the microprocessor 42 to use the information from the opto couplers 34/36 provides accurate results. The embodiments advantageously provide a system for detecting a stalled motor and means for disconnecting the stalled motor.

In both of the Figures 2 and 3 the section of the diagram above the dashed A is implemented, in practice, on a printed circuit board.

A digital implementation has been described above. The invention can also be implemented using analogue components.

The reader's attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s).

## Claims

1. A drive system for a movable closure device comprises:
a motor (10) comprising first and second windings (16,18) operable to drive a movable closure device in one direction to an open position thereof and in an opposite direction to a closed position thereof and vice versa by selecting one of the windings (16/18) and deselecting the other; and
stall detection means operable to detect a stall condition of the motor (10), based on a reduced voltage detected in circuitry of the motor (10);
**characterised in that**, the stall detection means is operable to detect a potential of a non-selected first or second winding (16/18).

2. A drive system as claimed in claim 1, in which the stall detection means is operable to detect a fall in potential below a first predetermined threshold value of the non-selected first or second winding (16/18).

3. A drive system as claimed in claim 2, in which the first predetermined threshold value is approximately in the range 130 volts to 210 volts.

4. A drive system as claimed in any one of claims 2 to 3, in which the stall detection means is operable to compare a potential of a selected first or second winding (16/18) with a potential of a non-selected second or first winding (16/18).

5. A drive system as claimed in claim 4, in which the stall detection means is operable to detect a fall in potential of the first or second non-selected winding (16/18), below a second predetermined threshold value.

6. A drive system as claimed in claim 5, in which the second predetermined threshold value is used by the stall detection means to determine if a limit switch (22/24) of the drive system has been triggered.

7. A drive system as claimed in either claim 5 or claim 6, in which the stall detection means is operable to measure the potential of the first or second non-selected winding (16/18) for the first predetermined threshold before the second predetermined threshold.

8. A drive system as claimed in any preceding claim, in which the moveable closure device is a blind, an awning, a gate, a barrier, a roller shutter or a similar device.

9. A stall detection means for a drive system for a moveable closure device comprising the features as claimed in any one of claims 1 to 8.

10. A method of driving a moveable closure device comprises:
driving a motor (10) comprising first and second windings (16,18) to urge the moveable closure device in one direction to an open position thereof and in an opposite direction to a closed position thereof and vice versa by selecting one of the windings (16/18) and deselecting the other; and
operating stall detection means to detect a stall condition of the motor (10) by detecting a reduced voltage in circuitry of the motor (10);
**characterised in that**, the stall detection means is operable to detect a potential of a non-selected first or second winding (16, 18).

## Patentansprüche

1. Antriebssystem für eine bewegliche Schließvorrichtung, aufweisend:
einen Motor (10), der erste und zweite Wicklungen (16, 18) aufweist, die zum Antreiben einer beweglichen Schließvorrichtung in einer Richtung in eine offene Position davon und in einer Gegenrichtung in eine geschlossene Position davon und umgekehrt durch Auswählen von einer der Wicklungen (16/18) und Deaktivieren der anderen betreibbar ist; und
Stillstanderkennungsmittel, die zum Erkennen eines Stillstandzustands des Motors (10) auf Grundlage einer verringerten Spannung in Schaltungen des Motors (10) betreibbar sind;
**dadurch gekennzeichnet, dass** das Stillstanderkennungsmittel zum Erkennen eines Potentials einer nicht ausgewählten ersten oder zweiten Wicklung (16/18) betreibbar ist.

2. Antriebssystem nach Anspruch 1, wobei das Stillstanderkennungsmittel zum Erkennen eines Abfalls des Potentials unter einen ersten vorgegebenen Schwellenwert der nicht ausgewählten ersten oder zweiten Wicklung (16/18) betreibbar ist.

3. Antriebssystem nach Anspruch 2, wobei sich der erste vorgegebene Schwellenwert ungefähr im Bereich von 130 Volt bis 210 Volt befindet.

4. Antriebssystem nach einem der Ansprüche 2 bis 3, wobei das Stillstanderkennungsmittel zum Vergleichen eines Potentials einer ausgewählten ersten oder zweiten Wicklung (16/18) mit einem Potential einer nicht ausgewählten zweiten oder ersten Wicklung (16/18) betreibbar ist.

5. Antriebssystem nach Anspruch 4, wobei das Stillstanderkennungsmittel zum Erkennen eines Abfalls des Potentials der ersten oder zweiten, nicht ausgewählten Wicklung (16/18) unter einen zweiten vorgegebenen Schwellenwert betreibbar ist.

6. Antriebssystem nach Anspruch 5, wobei der zweite vorgegebene Schwellenwert von dem Stillstanderkennungsmittel zum Bestimmen benutzt ist, ob ein Grenzschalter (22/24) des Antriebssystems angesteuert wurde.

7. Antriebssystem nach einem der Ansprüche 5 oder 6, wobei das Stillstanderkennungsmittel zum Messen des Potentials der ersten oder zweiten, nicht ausgewählten Wicklung (16/18) für den ersten vorgegebenen Schwellenwert vor dem zweiten vorgegebenen Schwellenwert betreibbar ist.

8. Antriebssystem nach einem der vorhergehenden Ansprüche, wobei die bewegliche Schließvorrichtung eine Blende, eine Markise, ein Tor, eine Schranke, ein Rollladen oder eine ähnliche Vorrichtung ist.

9. Stillstanderkennungsmittel für ein Antriebssystem für eine bewegliche Schließvorrichtung, aufweisend die Merkmale nach einem der Ansprüche 1 bis 8.

10. Verfahren zum Antreiben einer beweglichen Schließvorrichtung, aufweisend:
Antreiben eines Motors (10), der erste und zweite Wicklungen (16, 18) aufweist, zum Drängen der beweglichen Schließvorrichtung in eine Richtung in eine offene Position davon und in eine Gegenrichtung in eine geschlossene Position davon und umgekehrt durch Auswählen von einer der Wicklungen (16/18) und Deaktivieren der anderen; und
Betreiben von Stillstanderkennungsmitteln zum Erkennen eines Stillstandzustands des Motors (10) durch Erkennen einer verringerten Spannung in Schaltungen des Motors (10);
**dadurch gekennzeichnet, dass** das Stillstanderkennungsmittel zum Erkennen eines Potentials einer nicht ausgewählten ersten oder zweiten Wicklung (16, 18) betreibbar ist.

## Revendications

1. Système d'entraînement pour un dispositif de fermeture mobile comprenant :
un moteur (10) comprenant des premier et deuxième enroulements (16, 18) capables d'entraîner un dispositif de fermeture mobile dans un sens dans une position d'ouverture de celui-ci, et dans un sens opposé dans une position de fermeture de celui-ci, et vice versa, en sélectionnant l'un des enroulements (16/18) et en désélectionnant l'autre ; et
un moyen de détection de calage capable de détecter un état de calage du moteur (10), sur la base d'une tension réduite détectée dans le circuit du moteur (10) ;
**caractérisé en ce que** le moyen de détection de calage est capable de détecter un potentiel d'un premier ou d'un deuxième enroulement non sélectionné (16/18).

2. Système d'entraînement selon la revendication 1, dans lequel le moyen de détection de calage est capable de détecter une chute de potentiel en dessous d'une première valeur de seuil prédéterminée du premier ou du deuxième enroulement non sélectionné (16/18).

3. Système d'entraînement selon la revendication 2, dans lequel la première valeur de seuil prédéterminée est approximativement de l'ordre de 130 volts à 210 volts.

4. Système d'entraînement selon l'une quelconque des revendications 2 à 3, dans lequel le moyen de détection de calage est capable de comparer un potentiel d'un premier ou d'un deuxième enroulement sélectionné (16/18) avec un potentiel d'un deuxième ou d'un premier enroulement non sélectionné (16/18).

5. Système d'entraînement selon la revendication 4, dans lequel le moyen de détection de calage est capable de détecter une chute de potentiel du premier ou du deuxième enroulement non sélectionné (16/18) en dessous d'une deuxième valeur de seuil prédéterminée.

6. Système d'entraînement selon la revendication 5, dans lequel la deuxième valeur de seuil prédéterminée est utilisée par le moyen de détection de calage pour déterminer si un interrupteur de sécurité (22/24) du système d'entraînement a été déclenché.

7. Système d'entraînement selon la revendication 5 ou la revendication 6, dans lequel le moyen de détection de calage est capable de mesurer le potentiel du premier ou du deuxième enroulement non sélectionné (16/18) pour le premier seuil prédéterminé avant le deuxième seuil prédéterminé.

8. Système d'entraînement selon l'une quelconque des revendications précédentes, dans lequel le dispositif de fermeture mobile est un store, un auvent, une grille, une barrière, un volet roulant ou un dispositif similaire.

9. Moyen de détection de calage pour un système d'entraînement pour un dispositif de fermeture mobile comprenant les caractéristiques selon l'une quelconque des revendications 1 à 8.

10. Procédé d'entraînement d'un dispositif de fermeture mobile, comprenant :
entraîner un moteur (10) comprenant des premier et deuxième enroulements (16, 18) pour solliciter le dispositif de fermeture mobile dans un sens dans une position d'ouverture de celui-ci et dans un sens opposé dans une position de fermeture de celui-ci et vice versa en sélectionnant l'un des enroulements (16/18) et en désélectionnant l'autre ;et
actionner le moyen de détection de calage pour détecter un état de calage du moteur (10) en détectant une tension réduite dans le circuit du moteur (10) ;
**caractérisé en ce que** le moyen de détection de calage est capable de détecter un potentiel d'un premier ou d'un deuxième enroulement non sélectionné (16, 18).
